# EUROPEAN PATENT APPLICATION

(11) **EP 1 693 356 A1**
(43) Date of publication of application: **23.08.2006**
(21) Application number: 03769515.2
(22) Date of filing: 03.11.2003
(51) Int. Cl.: C04B 41/48, C04B 41/83, C09D 133/08, C09D 133/10, C08F 220/16

(54) **STAIN-RESISTANT PROTECTOR FOR GLAZED EARTHENWARE CERAMIC TILES AND OTHER SIMILAR ARCHITECTONIC SUBSTRATES, COMPOSITION, APPLICATION METHOD AND POLYMERISATION (CURING) USING ULTRAVIOLET RADIATION**

(71) Applicant: Mediterrànea de Investigaciòn Cientifica, S.L., 46113 Moncada (Valencia) (ES)
(72) Inventor: LLAVATA GIMENO, Manuel, E- 46200 Paiporta (Valencia) (ES); CARDA CASTELL, Juan Bautista, E-12540-Vila-Real (Castillòn) (ES)
(74) Representative: Carvajal y Urquijo, Isabel
(86) International application number: PCT/ES2003/000563
(87) International publication number: WO 2005/042438

(57) **Abstract**

The invention relates to a dirt-resistant, aqueous coating composition which is used to seal surface pores and which maintains the high luster finish of the outer surface. According to the invention, the layer deposited on the surface, which remains thereon after application, can be easily removed using mechanical methods. The inventive composition comprises: a liquid polymer which is obtained by the polymerisation of a mixture containing hexanediol diacrylate and pentaerythritol tri/tetraacrylate or the derivatives thereof, an acrylic monomer (ethyl diacrylate), a surface additive (polydimethylsiloxane copolymer modified with polyester), an antifoaming agent (alkylbenzene modified with methoxypropyl acetate), a photoinitiator (benzophenone), and an aliphatic alcohol solvent (methanol). The sealing method comprises the following steps consisting of: drying the pre-glazed substrate, applying the organic product using a spatula, passing same through an ultraviolet radiation tunnel, leaving the polymer to mature, and removing the residual polymer from the surface of the tile with brushes.

## Description

### Technical Field

The present invention relates to compositions based on acrylic derivatives allowing the sealing of pores in architectonic substrates (mainly glazed porcelain earthenware and ceramic tiles), as well as their application method and use in this field.

### Introduction

Ceramic tiles are currently manufactured with different types of supports, earthenware and porcelain earthenware supports standing out as supports with the best technical features, which are obtained in single-burning cycles, both being characterised by their low porosity (between 2 and 4% of water absorption for the earthenware support and less than 0.5% for the porcelain earthenware support).

Furthermore, in the first one, the earthenware support, an intermediate layer called engobe is applied, and the enamel is applied on top of the engobe.

As regards the second support, the porcelain earthenware, two types must be distinguished, one called technical porcelain earthenware, the open porosity of which shows about 0% water absorption and no enamel is applied, and the second type called non-technical porcelain earthenware, to which an enamel is usually applied, thereby allowing that the porosity of the support can exceed the minimum considered.

A technology currently being developed is the glazing process, which achieves improving the esthetic features of the these products (obtaining surfaces with high luster or specular luster), although this is at the expense of some technical features, such as the reduction of resistance to scratching, and they are particularly susceptible to surface staining because the inner porosity of the piece, either the enamel, or the support (in the case of technical porcelain earthenware), is open in the glazing process.

Until now there have been solutions for preventing the soiling of surfaces in a series of generally organic products are applied after the piece is burned and glazed, which allows covering the open pores with said products.

These products are usually waxes, paraffins, silicones, etc., which require subsequent maintenance because they experience a process of degradation over time, this maintenance requiring successive applications after maximum six-month time intervals, and with the drawback that the final user has to do it once the ceramic floor tile is in place if the stain-resistant features are to be maintained. Furthermore, the degree of effectiveness of the stain-resistant property with products used up until now does not reach 100%.

### Object of the Present Invention

Given these drawbacks, investigations are currently focused on finding new application processes and new materials have been investigated which allow sealing the porosity in burned and glazed enameled earthenware and enameled technical porcelain earthenware supports, such that the stain-resistant property and the permanence thereof over time are maintained with a high degree of effectiveness.

The present invention claims an aqueous coating composition which is used to seal surface pores such that while at the same time said sealing is permanent and resistant to dirt, it maintains a high luster finish of the outer surface, and the layer deposited on the surface, which remains thereon after application, can be easily removed using mechanical means.

### State of the Art

German patent DE 111690 (25/03/96), of Bernd Neumann, *"Protective layer coating for hard surfaces against atmospheric corrosion, mechanical stress and chemical products, process of preparing and use thereof",* relates to a protective layer coating or impregnation for hard surfaces, particularly lacquered stone, ceramic, glass, metal, wood and plastic surfaces, to protect against atmospheric corrosion, mechanical stress or applied chemical products, as well as to facilitate the removal of possible stains or unwanted painting (graffiti) in impregnations or protective coatings. These protective coatings or impregnations consist of an active ingredient consisting of at least one natural and/or synthetic wax, at least one polymer or precursor and optionally pyrogenous silicic acid, a liquid carrier consisting of at least one organic liquid and/or water and optionally one or several conventional additives selected from the group of surfactants, leveling agents, dispersing agents, emulsifiers, stabilizers, protective colloids, filler agents, aromatizing agents, preservatives, dermal protective agents, matting agents, pigments, dyes and/or color blending agents.

US patent 115,856 (2/11/87), of Albert Barry Smith, *"Process for covering pores of the surface of a porous solid"* in which the porous solid (a material such as marble, travertine, limestone or lime) is subjected to a treatment with industrial solvents for removing the luster or stains; surface burnishing is carried out with an abrasive such as industrial diamond, the surface is rinsed to extract the detritus, the water is extracted with an organic solution, the surface is scrubbed with a sticky cloth to extract the grit, a mixture of polyurethane cured under moisture conditions, for example of formula C₃H₇NO₂, which blocks the pores, is applied, and finally the treated surface dries naturally. The sealed surface is resistant to water, heat, weather and chemical agents, and it can be applied to natural stone or articles made of this material.

US patent 155,660 (12/02/88), of Donald Bruce Larson for Rohm and Haas Company, *"Penetration treatment for porous substrates",* discloses a penetrating treatment composition containing high levels of one or several long-chain acrylate or methacrylate monomers together with one or several self-oxidizing compounds functioning as polymerisation initiators, and one or several metallic drying agents which can provide long-term water repellence to porous substrates. Suitable alkyl acrylates and methacrylates include decyl acrylate and methacrylate, lauryl acrylate and methacrylate, stearyl acrylate and methacrylate, lauryl and stearyl acrylate and methacrylate, dodecyl and pentadecyl acrylate and methacrylate, cetyl and eicosyl acrylate and methacrylate, and the like and mixtures thereof.

In *Journal of Coating Technology,* 60(756), 63-72, 1988, J.W. Knapczyk discloses the formation of films, among others pentaerythritol triacrylate and hexanediol diacrylate.

German patent DE 4021502 (05/07/90), of Bernhard Dotzauer et al. for Basf Aktiengesellschaft, *"Concrete stone covered with copolymeric films",* discloses the manner in which a concrete stone is coated in an easy manner and which does not become dirty at high temperatures; furthermore, the coating has to develop its effect as quickly as possible. To that end it uses a copolymer formed by an alkanol acrylic ester with 1 to 8 carbon atoms, alkanol methacrylic ester with 1 to 8 carbon atoms and/or aromatic vinyl monomers (preferably at least two monomers).

US patent 713,717 (11/06/91), *"Acrylate or methacrylate coating compositions comprising waxes",* of George W. Frost for Minnesota Mining and Manufacturing Company, discloses acrylate or methacrylate compositions for coating porous surfaces in which the composition comprises between 90 and 99.9% of acrylate and/or methacrylate, and between 0.1 and 5% of wax. In these compositions, the wax is soluble in the acrylate and methacrylate monomers when the monomers are in liquid state. The wax is incompatible with the hardened coating formed from the polymerisation of the acrylate and/or methacrylate monomers. The compositions are dried so as to provide a non-rough surface in surprisingly short periods of time compared with acrylate and methacrylate compositions constituted in a similar manner.

US patent 859,174 (27/03/92), of Harrison Scott Killam and Karl John Hartman for Rohm and Haas Company, *"Non-removable dirt-resistant coatings",* discloses a sealing coating for permanently protecting floor materials, which can be applied during the manufacture or preparation of the dirt-resistant architectonic substrate, particularly to hydrophobic dirt-causing agents, and providing high luster to the architectonic substrate. The sealing coating composition comprises a polymer comprising (a) 20% by weight or less of (meth)acrylate monomers, the homopolymers of which have a vitreous transition temperature of less than 20°C; (b) styrene; (c) methyl methacrylate; and (d) ethylenically unsaturated carboxylic acid. A process is provided for permanently sealing a substrate comprising coating the substrate with a sealing coating composition.

German patent DE 4310005 (27/03/93), *"Stabilizing and protective polymer solution impregnation for porous construction materials",* of Dr. Maurizio Ragnetti et al. for Degussa Aktiengesellschaft, claims the protection of construction materials by means of compounds that must allow impregnation with a high penetration depth and hydrophobic function, specifically a pre-polymer based on a (meth)acrylic ester, an ethylenically unstaturated monomer, having an epoxy function, and possibly an ethylenically unsaturated alkoxysilane group in which the methacrylic ester is present from 48 to 98% by weight and the epoxy monomer from 0.5 to 50% by weight.

### Brief Description of the Invention

The present invention aims to solve the problems associated with the currently used techniques by providing a sealing coating composition, followed by ultraviolet radiation treatment, which can be applied during the manufacture or preparation of the architectonic substrate, which is permanent and dirt-resistant, particularly resistant to hydrophobic soiling agents, and which provides a high degree of luster to the architectonic substrate. Another object of the present invention is to provide a method for permanently sealing an architectonic substrate so as to provide improved resistance to soiling and to remove the polymer layer deposited on the outer surface of the substrate.

According to a first aspect of the present invention, a sealing coating composition is provided comprising:
a) a liquid polymer obtained by polymerisation of a mixture containing hexanediol diacrylate and/or pentaerythritol tri/tetraacrylate or derivatives thereof.
b) an acrylic monomer (ethyl diacrylate).
c) a surface additive (polydimethylsiloxane copolymer modified with polyester).
d) an antifoaming agent (alkylbenzene modified with methoxypropyl acetate).
e) a photoinitiator (benzophenone), and
f) an aliphatic alcohol solvent (methanol)

According to a second aspect of the present invention, a method is provided for permanently sealing a substrate comprising:
i) drying said pre-glazed substrate by means of infrared radiation or by another power source.
ii) applying the organic product by means of a rotary machine, sometimes called a spatula.
iii) passing same through an ultraviolet radiation tunnel (combination of high and low energy Ga and Hg lamps, leaving the polymer to mature.
iv) process of removing the residual polymer from the surface of the tile with brushes.

The substrate is preferably a substrate for floors chosen from the group formed by floor tiles, terrazzo, marble, brick and concrete.

### Detailed Description of the Invention

In the present invention, "substrate" is understood as any porous surface preferably used in floors such as terrazzo, marble and other natural stones, bricks, paving stones, ceramic floor tiles, concrete, glazed pottery and porcelain.

The term "resistance to soiling" refers to the ability of a material to prevent permanent discoloration due to common domestic and industrial agents and which cannot be removed by means of conventional cleaning techniques or treatment with cleaning agents based on water or organic solvents. The strongest soiling agents include coal asphalt/tar, shoe polish, mustard, ketchup, coffee, lipstick, tobacco and other types of cigarettes, neozone, chocolate syrup and the like. Coal asphalt/tar is the most intense of these soiling agents. Resistance to soiling due to coal asphalt/tar is usually indicative of the resistance to soiling by means of other less intense soiling agents [UNE-EN ISO 10545-13. 5501033, "Resistance to stains (ceramic floor tiles)"].

The composition object of the present invention is formed by two types of substance. There are essential substances, which will give rise to the sealing polymer, and other complementary substances present in similar compositions, and of course the solvent.

The essential substances are:
- A liquid polymer; the liquid polymer used in the present invention is obtained by polymerisation of two monomers derived from pentaerythritol tri/tetraacrylate (PETIA):

   R₁CH₂C(CH₂R₂)₃

   and from hexanediol diacrylate (HDDA):

   R₂CH₂(CH₂)₄CH₂R₂

   wherein R₁ represents H or the acrylate or methacrylate radical:

   CH₂CHCOO or CH₂C(CH₃)COO

   and R₂ represents the acrylate or methacrylate radical:

   CH₂CHCOO or CH₂C(CH₃)COO.

   The proportion in which these two monomers are found in the polymer composition ranges between 40 and 60% by weight, the sum of both being 100%.
- An acrylic monomer, which is an alkyl diacrylate, preferably ethyl diacrylate:

   (CH₂CHCOO)₂CH₃CH₃

   or an ethyl dimethacrylate:

   (CH₂C(CH₃)COO)₂CH₃CH₃

As complementary substances, the composition in the formulation must include a surfactant (or surface additive) for the purpose of favoring penetration of the solution in the pores to be sealed. Due to the presence of surfactants in the formulation, it is necessary to an antifoaming or defoaming agent to the formulation to prevent foam marking on the sealing film, and of course a photoinitiator to achieve cold polymerisation:
- A polydimethylsiloxane copolymer modified with polyester can be used as a surface additive.
- An alkylbenzene modified with methoxypropyl acetate can be used as an antifoaming agent.
- Benzophenone, acetophenone, isopropylthioxanthone or similar compounds are used as a photoinitiator.

Finally, the composition must include a carrier acting as a solvent of the described substances:
- The alcohol solvent is an aliphatic alcohol with up to four carbon atoms, such as methanol.

The proportions in which the components are mixed (the sum of which must of course be 100%) are provided in Table I:

**TABLE I**

| Component | Limits, % by weight | Recommended, % |
|---|---|---|
| Liquid polymer | 18-30 | 20 |
| Monomer | 1-20 | 4.5 |
| Surface additive | 0-0.3 | 0.3 |
| Antifoaming agent | 0-1.5 | 0.7 |
| Photoinitiator | 0-3 | 1.5 |
| Solvent | 60-80 | 73 |

As regards the preparation and use of this composition, these are carried out following the following steps:

### Preparing and packaging the composition

The corresponding volume of solvent is introduced in a reactor with a sufficient capacity, provided with stirring, and the remaining components are added, with the exception of the photoinitiator, in the proportions indicated in Table I. The obtained solution is packaged in a suitable container.

### Drying said pre-glazed substrate by means of infrared radiation or by another power source

The substrate to be subjected to pore sealing coming from the conventional manufacturing process, which ended with the glazing and washing phase, requires drying prior to the treatment object of the present invention. This drying is carried out by conventional methods, preferably by infrared radiation.

### Application of the composition

The mixture thus prepared is applied on the substrate either by a rotary machine, sometimes called a spatula, or by spraying.

Of course immediately before being applied to the substrate, the formulation is completed by adding the suitable amount of photoinitiator unless the solution is stored in an opaque container protected from the light. In this case, the photoinitiator was added when the formulation was prepared.

### Passing through an ultraviolet radiation tunnel

The polymer is matured by means of the combination of high and low energy ultraviolet lamps (standard gallium and mercury lamps with wavelength ranges between 220 and 450 nm).

This process can be carried out continuously, passing the substrate under the lamps at a working speed of 20 to 30 meters/minute.

### Process of removing the residual polymer from the surface of the substrate

The composition applied on the substrate has not only sealed the pores but has also coated the surface. The main novelty of the present invention is that once the composition is polymerized, it has a "poor" adherence to the outer surface of the substrate, further being "cracked", which facilitates the removal thereof by means of conventional mechanical methods, either by means of brushing or scraping. Therefore, once the surface shape that was obtained by means of glazing is restored, the features of the ceramic surface, such as the degree of luster obtained with the glaze, are not distorted.

Maximum physical and chemical properties are thus obtained in the sealing of the pore with permanence over time and not requiring regeneration.

The volumetric contraction of the resin after polymerisation is close to 0%.

### Examples

A series of non-limiting examples is provided below which show one way of carrying out the present invention.

### Example 1. Preparing the resin

5 kg of commercial grade methyl alcohol are loaded in an 8 L capacity glass container equipped with a mechanical stirrer.

The following is added while stirring:
- 1.30 kg of a polymer obtained by polymerisation of two monomers: pentaerythritol (PETIA) and hexanediol diacrylate (HDDA) or a similar monomer.
- 0.30 kg of ethyl diacrylate.
- 0.02 kg of the polydimethylsiloxane copolymer modified with polyester.
- 0.05 kg of ethyl benzene modified with methoxypropyl acetate.
- 0.10 kg of acetophenone are added as a photoinitiator to this mixture at the time it is used, specifically 2,2-dimethoxy-2-phenylacetophenone, commercially available as IRGACURE® 651 of Ciba-Geigy, or it is added with the remaining components and the solution is stored in a cool place in an opaque container.

### Example 2. Applying the pre-polymer

The alcohol solution obtained according to example 2 is used as a starting material.

Earthenware floor tiles are used which are subjected to a pre-glazing treatment by means of conventional methods. Once the floor tiles are glazed and washed, they are dried by passing them under the action of infrared lamps.

The alcohol solution is applied on the substrate by means of a rotary machine called a spatula.

The floor tiles are then passed under high and low energy ultraviolet lamps (standard gallium and mercury lamps with wavelength ranges between 220 and 450 nm) at a working speed of 25 meters/minute

Once the composition applied on the substrate is polymerized, it is "cracked", facilitating its removal by means of conventional mechanical methods by means of scraping with a blade in this specific case.

### Example 3. Resistance to staining

A floor tile of Example 2 is subjected to a soiling test consisting of applying on the surface thereof a test stain of 1-2.5 g of a soiling agent formed by a mixture of 70 parts of asphalt emulsion with 30 parts of coal tar. The soiling agent was kept on the surface of the test sample for 30 minutes; then the test sample was cleaned with dry gauzes so as to remove the greatest possible amount of the soiling agent; then the test sample was cleaned with a gauze moistened with mineral alcohols so as to remove all the residues of the soiling agent that may remain on the surface; finally the test sample was rinsed with water and cleaned to dryness.

The obtained results show resistance to dirt that can be classified as excellent, i.e. no soiling is observed

## Claims

1. A stain-resistant protector composition for glazed earthenware ceramic tiles and other similar architectonic substrates, **characterised in that** it comprises: (A) a liquid polymer, (B) an acrylic monomer and optionally (C) a photoinitiator, which substances are dissolved in an alcohol vehicle (D); wherein (A) is a liquid polymer obtained by polymerisation of a mixture containing hexanediol diacrylate and pentaerythritol tri/tetraacrylate or the derivatives thereof, (B) an acrylic monomer such as ethyl diacrylate, (C) a photoinitiator such as benzophenone and (D) an aliphatic alcohol solvent such as methanol.

2. A composition according to claim 1, **characterised in that** the liquid polymer (A) is the one obtained by polymerisation of two monomers derived from pentaerythritol tri/tetraacrylate (PETIA):
R₁CH₂C(CH₂R₂)₃
and from hexanediol diacrylate (HDDA):
R₂CH₂(CH₂)₄CH₂R₂
wherein R₁ represents H or the acrylate or methacrylate radical:
CH₂CHCOO or CH₂C(CH₃)COO
and R₂ represents the acrylate or methacrylate radical:
CH₂CHCOO or CH₂C(CH₃)COO.
The proportion in which these two monomers are found in the polymer composition ranges between 40 and 60% by weight, the sum of both being 100%.

3. A composition according to claims 1 and 2, **characterised in that** the proportion of component (A) in the entirety of the mixture is between 18 and 30% by weight.

4. A composition according to claims 1 and 2, **characterised in that** the proportion of component (A) in the entirety of the mixture is 20% by weight.

5. A composition according to claim 1, **characterised in that** the acrylic monomer (B) is an alkyl diacrylate, preferably ethyl diacrylate:
(CH₂CHCOO)₂CH₃CH₃
or an ethyl dimethacrylate:
(CH₂C(CH₃)COO)₂CH₃CH₃

6. A composition according to claims 1 and 5, **characterised in that** the proportion of component (B) in the entirety of the mixture is between 1 and 20% by weight.

7. A composition according to claims 1 and 5, **characterised in that** the proportion of component (B) in the entirety of the mixture is 4.5% by weight.

8. A composition according to claim 1, **characterised in that** the photoinitiator (C) is chosen between benzophenone, isopropylthioxanthone or similar products.

9. A composition according to claims 1 and 8, **characterised in that** the proportion of component (C) in the entirety of the mixture is between 0 and 3% by weight.

10. A composition according to claims 1 and 8, **characterised in that** the proportion of component (C) in the entirety of the mixture is 1.5% by weight.

11. A composition according to claim 1, **characterised in that** the alcohol solvent (D) is an aliphatic alcohol with up to 4 carbon atoms, preferably methanol, and its proportion in the mixture is between 60 and 80% by weight, the proportion of the solvent or component (D) being the difference up to 100% of the sum of the remaining components.

12. A composition according to claims 1 to 11, **characterised in that** it contains a surface additive consisting of polydimethylsiloxane copolymer modified with polyester and its proportion in the mixture is between 0 and 0.3% by weight.

13. A composition according to claims 1 to 11, **characterised in that** it contains a surface additive consisting of polydimethylsiloxane copolymer modified with polyester and its proportion in the mixture is 0.3% by weight.

14. A composition according to claims 1 to 11, **characterised in that** it contains an antifoaming agent consisting of alkylbenzene modified with methoxypropyl acetate and its proportion in the mixture is between 0 and 1.5% by weight.

15. A composition according to claims 1 to 11, **characterised in that** it contains an antifoaming agent consisting of alkylbenzene modified with methoxypropyl acetate and its proportion in the mixture is 0.7% by weight.

16. A method for permanently sealing an architectonic substrate by means of a composition according to claims 1 to 15 (to which the photoinitiator is added in the event that it does not have one), **characterised in that** it comprises the following correlative steps:
• Drying the pre-glazed substrate by means of infrared radiation or another power source.
• Applying the organic product by means of a rotary machine sometimes referred to as spatula.
• Passing same through an ultraviolet radiation tunnel (combination of high and low power gallium and mercury lamps), leaving the polymer to mature.
• Removing the residual polymer from the outer surface of the tile by brushing or scraping.

17. The use of the composition according to claims 1 to 16 to prevent the penetration of dirt in any porous surface preferably used in floors, such as terrazzo, marble and other natural stones, brick, paving stones, ceramic tiles, concrete, glazed pottery and porcelain.
